# EUROPÄISCHE PATENTSCHRIFT

(11) **EP 3 595 433 B1**
(45) Veröffentlichungstag und Bekanntmachung des Hinweises auf die Patenterteilung: **20.12.2023**
(21) Anmeldenummer: 18711548.0
(22) Anmeldetag: 15.03.2018
(51) Int. Cl.: B60L 53/30, A01G 31/02, A01G 9/02, B60L 53/53, B60L 53/51, B60L 53/66

(54) **MULTIFUNKTIONS-VORRICHTUNG ZUM HALTEN VON PFLANZEN**
MULTIFUNCTIONAL DEVICE FOR CULTIVATING PLANTS
DISPOSITIF MULTIFONCTION DESTINÉ À CONTENIR DES PLANTES

(30) Priorität: 17.03.2017 DE 102017105738
(43) Veröffentlichungstag der Anmeldung: 22.01.2020
(73) Patentinhaber: Plattner, Wolfgang, 85247 Schwabhausen (DE)
(72) Erfinder: Plattner, Wolfgang, 85247 Schwabhausen (DE)
(74) Vertreter: Meissner Bolte Partnerschaft mbB
(86) Internationale Anmeldenummer: PCT/EP2018/056476
(87) Internationale Veröffentlichungsnummer: WO 2018/167191

(56) Entgegenhaltungen:
- WO-A1-2014/194737
- WO-A1-2016/203383
- CN-A- 105 557 373
- CN-A- 105 794 525
- DE-B3-102015 117 902
- DE-U1-202013 009 914
- DE-U1-202013 104 271
- GB-A- 2 386 981
- US-A1- 2013 118 070
- US-A1- 2016 345 517

## Beschreibung

Die Erfindung betrifft eine Multifunktions-Vorrichtung zum Halten von Pflanzen mit mindestens einem Pflanzgefäß gemäß Anspruch 1.

Pflanzen werden üblicherweise in genormten Kulturtöpfen mit einem oder mehreren Bewässerungs- und Wurzelwachstumsöffnungen, die auch als Kulturtopfschlitze bezeichnet werden, kultiviert und vermarktet. Hydrokulturpflanzen werden meist im Kulturtopf auf den Boden eines wasserdichten Gefäßes, beispielsweise eines Pflanzgefäßes der eingangs genannten Art, gesetzt, und mit Tongranulat (Blähton) gefüllt. Erdpflanzen werden üblicherweise in ihrem Kulturtopf belassen und in einen Übertopf gestellt.

Des Weiteren ist es bekannt, den Kulturtopf zu entfernen und die Pflanze direkt in ein Gefäß oder in eines der derzeit am Markt bekannten Erdbewässerungssysteme für Pflanzgefäße oder Becken zu pflanzen. Am Boden der wasserdichten Gefäße für Hydrokulturen oder der Erdbewässerungssysteme ist außerdem ein Wasserstandsanzeiger ausgebildet, der beim Gießen die entsprechende Wasserstandshöhe anzeigt. Dabei ist die Wasserstandsanzeige ebenfalls von einem organischen oder anorganischen Trägermaterial umgeben. Derzeit müssen neu bepflanzte Hydrokulturpflanzen in Abhängigkeit der Kulturtopfgröße und Pflanzgefäßgröße in einem Gießzeitraum von 5 - 21 Tagen gegossen werden. Erdpflanzen im Übertopf ohne Bewässerungssystem sind hingegen in einem Gießzeitraum von 1 - 7 Tagen zu bewässern. In einem Erdbewässerungssystem müssen die Pflanzen in einem Gießzeitraum von 2 - 6 Wochen mit Wasser oder wässriger Nährlösung versorgt werden.

Nachteilig bei derzeitigen Pflanzsystemen ist es, dass sich der Pflanzenballen und die Wurzeln der Pflanzen regelmäßig über einen längeren Zeitraum direkt im Wasser befinden. Beim Gießen der Pflanzen werden regelmäßig Schwemmstoffe des verwendeten Substrates freigesetzt und zusätzlich Oberflächenverunreinigungen (Staub etc.) eingeschwemmt, die sich am Gefäßboden ablagern. Auch eventuell verwendeter formstabiler Langzeitdünger in Granulatform, der beim Gießen eingeschwemmt wird, lagert sich am Gefäßboden ab. Diese Ablagerungen setzen im Laufe der Zeit insbesondere die Wurzelwachstums- und Bewässerungsöffnungen der Kulturtöpfe von Hydrokulturpflanzen und Erdbewässerungssystemen zu, oder setzen sich im unteren Bereich des Wurzelballens der Pflanze ab.

Die Folge ist ein Verdichten der Vegetationszone im Wurzelbereich, eine Verringerung der Sauerstoffzufuhr für die Wurzeln in Höhe der Bewässerungsöffnungen, insbesondere in Höhe der Kulturtopfschlitze. Die genannten Verdichtungen führen unweigerlich zum Absterben und zur Fäulnisbildung der Wurzeln, so dass sich der Verdichtungsprozess kontinuierlich vom Bodenbereich nach oben hin fortsetzt und immer größer wird. Die Druckschrift DE202013104271 U1 offenbart den Oberbegriff des Anspruchs 1.

Die zunehmende Versiegelung von Flächen in Freiräumen und Räumen, wie z.B. in Fußgängerzonen in Städten, Gehwegen, Parkplätzen, Straßen, Flughafenterminals, Eingangshallen usw. erwecken den Wunsch der zusätzlichen Begrünung dieser versiegelten Flächen in Freiräumen und Räumen. Allerdings scheuen Kommunen und Unternehmen oftmals vor den Kosten für die Anschaffung von Pflanzgefäßen zurück. Demnach wäre es vorteilhaft, wenn zusätzlich zur Begrünung von versiegelten Flächen in Freiräumen und Räumen eine zusätzliche Funktion durch das Pflanzgefäß erfüllt wäre.

Aus dem Vorgenannten ergibt sich die Aufgabe der vorliegenden Erfindung, wonach eine kostengünstige Vorrichtung zum Halten von Pflanzen, insbesondere von Hydrokulturpflanzen, in Pflanzgefäßen angegeben werden soll. Des Weiteren sollen mit der erfindungsgemäßen Vorrichtung zum Halten von Pflanzen zusätzliche Funktionen erfüllt werden.

Diese Aufgabe wird durch eine Multifunktions-Vorrichtung zum Halten von Pflanzen mit mindestens einem Pflanzgefäß nach Anspruch 1 gelöst.

Insbesondere wird diese Aufgabe dadurch gelöst, dass die Multifunktions-Vorrichtung zum Halten von Pflanzen mindestens ein Pflanzgefäß sowie mindestens eine stromgespeiste und/oder stromspeisende Funktionseinheit umfasst.

Sofern ein Unternehmen und/oder eine Kommune die Begrünung von versiegelten Flächen in Freiräumen und Räumen fördern will, ist es nunmehr mit Hilfe der Multifunktions-Vorrichtung zum Halten von Pflanzen mit mindestens einem Pflanzgefäß möglich, eine zusätzliche Aufgabe mit Hilfe der Vorrichtung zum Halten von Pflanzen zu erfüllen.

Erfindungsgemäß umfasst die Multifunktions-Vorrichtung ein Positionierungselement, in welches wenigstens ein Kulturtopf, der einen Kulturtopfmantel und einen Kulturtopfboden aufweist, derart einsetzbar und befestigbar ist, dass das Positionierungselement zusammen mit dem Kulturtopf derart in das Pflanzgefäß einsetzbar ist, dass unterhalb des Positionierungselements ein im Wesentlichen abgedichteter Atmosphärenbereich und ein Vegetationsraum gebildet sind, in welchen ein unterer Abschnitt des Kulturtopfes ragt, wobei das Positionierungselement derart ausgebildet ist, dass der Kulturtopfboden in einem Höhenabstand zu einem Boden des Pflanzgefäßes und/oder eines Wasserbeckens und/oder eines Wasserbassins und/oder eines Gewässers positionierbar ist.

Demnach ist es erfindungsgemäß vorgesehen, dass die Multifunktions-Vorrichtung insbesondere zum Halten von Hydrokulturpflanzen ausgebildet ist, wobei der Arbeitsaufwand und die Arbeitszeit für die Bepflanzung, die Pflege oder die Arbeitszeit für den Austausch/Ersatz von Kulturpflanzen wesentlich verkürzt ist und zusätzlich das Pflanzenwachstum gefördert wird.

Die eingangs genannten Nachteile bekannter Systeme für Pflanzen werden demnach mit der Multifunktions-Vorrichtung überwunden. Dies ist darauf zurückzuführen, dass unterhalb des Positionierungselements ein im Wesentlichen abgedichteter Vegetationsraum gebildet ist, in welchen ein unterer Abschnitt des Kulturtopfes ragt, wobei sich zur Bildung einer Klimazone unterhalb des Positionierungselements und oberhalb der Oberfläche ein Atmosphärenbereich erstreckt, der nach außen durch das Pflanzgefäß und/oder einen Vegetationsmantel und/oder ein Außengefäß abgeschlossen/umschlossen ist.

Der gebildete Vegetationsraum wird von der Umwelt zum Teil entkoppelt, wodurch die Luftwechselrate zwischen Vegetationsraum und Umwelt herabgesetzt wird. Daher ist ein Luftaustausch mit der Atmosphäre hauptsächlich nur noch über die Wurzelwachstums- und Bewässerungsöffnungen des Kulturtopfes, und damit unmittelbar im Bereich des Wurzelwerks der Pflanze möglich. Dies sorgt zum einen für ein gutes Wachstumsklima im Vegetationsraum mit einer hohen Luftfeuchtigkeit, und zum anderen verhindert es ungehindertes Verdunsten von Wasser oder wässriger Nährlösung aus dem Vegetationsraum direkt nach außen. Das Wasser bzw. die Nährlösung verbleibt unter dem Positionierungselement und lagert sich beim Verdunsten an der Unterfläche des Positionierungselementes sowie an den Seiten des Kulturtopfes ab und tropft wieder in ein Wasserreservoir. Dadurch werden notwendig Gießintervalle wesentlich verlängert, sodass Gießperioden, beispielsweise für "Mietpflanz-Konzepte", wesentlich verlängert werden können. Außerdem müssen Bauhöfe oder andere Verwaltungssysteme von Kommunen in geringerem Maße, d.h. in zeitlich größeren Abständen, für eine Bewässerung der Pflanzen Sorge tragen. Dies spart Personal- und/oder Verwaltungskosten.

Ein weiterer wesentlicher Vorteil der erfindungsgemäßen Lösung besteht darin, dass anorganisches Substrat oder Granulat im Pflanzgefäß nicht für die Befestigung und Positionierung des Kulturtopfes und/oder eines Wasserstandsanzeigers benötigt werden. Außerdem wird eine Wasserverdrängung durch das Substrat vermieden. Das dadurch zusätzlich zur Verfügung stehende Wasserreservoir wird dadurch wesentlich vergrößert. Des Weiteren können eingangs genannte Schwemmstoffe die Bewässerungsöffnungen nicht mehr zusetzen bzw. sich im Bereich der Bewässerungsöffnungen nicht mehr ablagern, da die Bewässerungsöffnungen nicht mehr mit Substrat bedeckt sind und sich nicht am Gefäßboden befinden.

Dadurch werden auch Wurzelverdichtungen im Bereich des Kulturtopfes und insbesondere im Pflanzgefäß vermieden, und eine daraus resultierende Wurzelfäulnis ausgeschlossen. Die Vitalität der Kulturpflanzen wird dadurch nachhaltig verbessert, und die Haltbarkeit maßgeblich erhöht. Durch die Vermeidung der Wurzelverdichtung sowie der Substratverdichtung kann es auch nicht mehr zu Rissbildungen in Pflanzgefäßen kommen. Ein Umpflanzen infolge von Rissbildung und Wasserverlust, sowie infolge von Substratverdichtung im Pflanzgefäß, ist damit nicht mehr nötig.

Der unterhalb des Positionierungselements liegende Vegetationsraum besteht im Wesentlichen nur aus Luft und Wasser. Im Falle eines notwendig werdenden Ersetzens einer Pflanze, kann der Kulturtopf mit Pflanze sehr einfach ausgetauscht werden. Der wesentliche Vorteil besteht darin, dass nicht das komplette Gefäß mit Tongranulat entleert und wiederbefüllt werden muss. Darüber hinaus wird Wurzelfäulnis durch Verdichtung weitestgehend ausgeschlossen, und Wasserstandsanzeigeröffnungen werden nicht zugesetzt.

Des Weiteren bleiben die Kulturtopfschlitze und Bewässerungsöffnungen weitestgehend schwemmstofffrei, und das Wasser klar, sauber und geruchsneutral, ohne biologisch umzukippen. Ein ganz wesentlicher Vorteil ist die optimale Sauerstoffzufuhr im Wurzelbereich. Zusammenfassend können so übliche und nötige Umpflanzungen auf Dauer entfallen.

In einer Ausführungsform der Erfindung ist das Positionierungselement als ein Blech oder Flächenelement gefertigt. Insbesondere ist das Positionierungselement als ein im Wesentlichen geschlossenes Blech oder Flächenelement zur Verstärkung einer Kondensatbildung gefertigt. Vorzugsweise ist das Positionierungselement aus einem gut wärmeleitenden Material gebildet.

Vorzugsweise ist das Positionierungselement derart form- und/oder kraftschlüssig oder stoffschlüssig mit dem Pflanzgefäßmantel oder einem Vegetationsmantel oder Distanzelement derart verbindbar oder verbunden, dass sich das Positionierungselement über dem Boden des Pflanzgefäßes befindet. Diese Verbindung gibt dem Positionierungselement Halt und definiert seinen Abstand zur Oberfläche. Daraus resultiert die Höhe des Vegetationsraums und bietet den Vorteil, dass die Gestaltung des Positionierungselementes und des zu seiner Herstellung verwendeten Herstellungsverfahrens relativ frei wählbar ist.

So hat eine Verbindung mit dem Pflanzgefäßmantel den Vorteil, dass keine weiteren Bauteile oder Elemente benötigt werden. Ein Vegetationsmantel ist ein Mantel, der den Vegetationsraum in radialer Richtung begrenzend abschließt, der mit dem Positionierungselement verbindbar oder verbunden ist, und einen luftdichten Vegetationsraum bildet. Der Vegetationsmantel ragt vorzugsweise in die Oberfläche des Wassers oder der wässrigen Lösung. Der Vegetationsmantel kann im wasserführenden Bereich Durchströmungsöffnungen für eine ausreichende Wasserzirkulation aufweisen. Außerdem kann der Vegetationsmantel das Positionierungselement nach unten abstützen.

Des Weiteren ist es möglich, dass Distanzelemente, insbesondere Stelzen oder Beine, das Positionierungselement nach unten, d.h. in Richtung des Pflanzgefäßbodens, abstützen, und die Höhe des Vegetationsraums definieren. Weiterhin ist es möglich, dass der Kulturtopf aus dem Positionierungselement herausnehmbar und/oder das Positionierungselement aus dem Pflanzgefäß herausnehmbar ist. Somit wird ein besonders einfacher Austausch der Pflanze und/oder des Kulturtopfs ermöglicht.

Die Multifunktions-Vorrichtung kann ein Außengefäß umfassen, das durch das Pflanzgefäß gebildet ist, oder in dem das Pflanzgefäß positioniert ist. Es wird somit eine Multifunktions-Vorrichtung ausgebildet, die zum einen Vorteil hinsichtlich des Haltens sowie des Kultivierens von Pflanzen aufweist, und außerdem hinsichtlich der äußeren Form bzw. des äußeren Erscheinungsbildes an die jeweilige Aufbausituation anpassbar ist.

Des Weiteren ist es dadurch möglich, dass das Außengefäß ein vom Pflanzgefäß separiertes Element der Multifunktions-Vorrichtung ist, und somit separat transportiert werden kann. Ein schweres Außengefäß, das beispielsweise aus Metall und/oder Steingut und/oder Beton hergestellt sein kann, kann somit unabhängig von dem Pflanzgefäß an eine Endposition transportiert werden. Ein derart hergestelltes Außengefäß aus schweren Materialien stellt vorteilhafterweise einen Diebstahlschutz dar, da das Außengefäß nicht einfach verschoben oder transportiert werden kann. Diesbezüglich ist ein entsprechendes Fahrzeug bzw. anderweitiges Gerät notwendig.

Außerdem kann ein Diebstahlschutz im Zusammenhang mit dem Pflanzgefäß und/oder dem Kulturtopf ausgebildet sein. Hierzu kann beispielsweise ein Bügel, insbesondere ein absperrbarer oder verschließbarer Bügel, ausgebildet sein, der zum Absperren oder Verschließen des Pflanzgefäßes oder des Kulturtopfes dient. Mit anderen Worten ist vorzugsweise ein, insbesondere absperrbarer und/oder verschließbarer, Bügel ausgebildet, der zur absperrbaren und/oder verschließbaren Befestigung des Kulturtopfes oder des Pflanzgefäßes dient. Damit wird verhindert, dass der Kulturtopf und/oder das Pflanzgefäß zusammen mit der darin befindlichen Pflanze unrechtmäßig aus der Multifunktions-Vorrichtung entwendet werden kann.

In einer weiteren Ausführungsform der Erfindung ist es möglich, dass das Außengefäß und/oder das Pflanzgefäß kein Bodenelement aufweist. Mit anderen Worten kann/können das Außengefäß und/oder das Pflanzgefäß bodenfrei ausgebildet sein. Eine derartige Multifunktions-Vorrichtung kann in einfacher Art und Weise in einem Wasserbassin positioniert werden.

Außerdem ist es möglich, dass der Pflanzgefäßmantel und/oder der Außengefäßmantel aus einzelnen Seitenwandelementen besteht/bestehen, die in ein Gestell und/oder in einen Kulturtopf eingehängt/befestigt werden. Dies erleichtert den Zusammenbau der Multifunktions-Vorrichtung.

In einer weiteren Ausführungsform der Erfindung kann die stromgespeiste Funktionseinheit mindestens einen Bildschirm umfassen. Bei dem Bildschirm handelt es sich vorzugsweise um einen Flachbildschirm oder einen gebogenen Flachbildschirm. Es kann demnach eine Multifunktions-Vorrichtung zur Verfügung gestellt werden, die neben einem Pflanzgefäß des Weiteren einen Bildschirm umfasst. Dieser Bildschirm kann beispielsweise zur Darstellung von Informationen oder Werbebotschaften dienen. Eine derartige Multifunktions-Vorrichtung kann beispielsweise als Werbeträger in öffentlichen Räumen und/oder öffentlichen Freiräumen aufgestellt werden.

Beispielsweise ist es möglich, dass eine derartige Multifunktions-Vorrichtung auf einem Gehweg aufgestellt wird. Des Weiteren könnte eine derartige Multifunktions-Vorrichtung in einem Bürogebäude oder in einem Unternehmen oder in einem Flughafenterminal aufgestellt werden. Demnach können mit derartigen Multifunktions-Vorrichtungen zum einen die beschriebenen Räumlichkeiten begrünt werden, und zum anderen Informationen wiedergegeben werden. In Bürogebäuden oder Empfangshallen oder in Flughafenterminals können Informationen wie Wegbeschreibungen angezeigt werden. Ein derartiger Anwendungsbereich ergibt sich auch auf Messgeländen bzw. in Messehallen.

Mit Hilfe der Multifunktions-Vorrichtung kann demnach eine mobile Vorrichtung zur Verfügung gestellt werden, die einen Bildschirm umfasst, wobei der Bildschirm diebstahlgesichert ist. Die Diesbstahlsicherung kann sich zum einen aufgrund der obengenannten Ausbildung des Außengefäßes aus schwerem Material ergeben. Des Weiteren ist es möglich, dass die Multifunktions-Vorrichtung zunächst in einem unbewässerten Zustand an die Endposition transportiert wird. Anschließend kann die Bewässerung des Pflanzgefäßes erfolgen. Durch diese Bewässerung ergibt sich ein zusätzliches Gewicht in der Multifunktions-Vorrichtung. Bei entsprechend großzügiger Ausbildung der Multifunktions-Vorrichtung kann demnach ein großes Wasserreservoir gefüllt werden. Da die Verdunstung des Wassers im Wasserreservoir wie beschrieben unterbunden bzw. stärkt verzögert wird, kann das Gewicht, das aufgrund der Bewässerung hinzugefügt wird, über einen langen Zeitraum erhalten bleiben.

Des Weiteren ist es möglich, dass bei einer separaten Ausbildung des Außengefäßes vom Pflanzgefäß zwischen dem Außengefäß und dem Pflanzgefäß ein derartiger Zwischenraum gebildet wird, der unabhängig von der Bewässerung mit Wasser gefüllt werden kann. Des Weiteren ist es denkbar, dass der Zwischenraum mit weiteren schweren Materialien, wie z.B. Steinen befüllt werden kann. Die Diebstahlsicherung kann auch im Rahmen andersartiger Ausbildung der stromgespeisten und/oder stromspeisenden Funktionseinheit erzielt werden.

Des Weiteren ist es möglich, dass der Bildschirm auf einer in vertikaler Richtung oberhalb eines/des Außengefäßes befindlichen Befestigungsvorrichtung befestigt wird. Bei einer derartigen Befestigungsvorrichtung kann es sich beispielsweise um eine Befestigungsfläche handeln. Des Weiteren ist es möglich, dass es sich bei der Befestigungsvorrichtung um ein teleskopartig verschiebbares Element handelt, so dass der Bildschirm höhenverstellbar befestigt sein kann. Dies ist insbesondere vorteilhaft, sofern die mittels der Multifunktions-Vorrichtung gehaltene Pflanze wächst oder bereits großgewachsen ist.

Des Weiteren ist es möglich, dass der Bildschirm auf einem/dem Außengefäß befestigt ist. Besonders bevorzugt ist der Bildschirm, insbesondere der Flachbildschirm derartig an dem Außengefäß befestigt, dass der Bildschirm zur Oberfläche des Außengefäßes bündig versenkt ausgebildet ist. Dies hat den Vorteil, dass der Bildschirm nicht über die Oberfläche des Außengefäßes hervorragt bzw. absteht, und somit eine unbeabsichtigte Beschädigung des Bildschirms vermieden wird. Ein Herausreißen des Bildschirms aufgrund eines "Hängenbleibens" eines Passanten an einem hervorstehenden Bildschirm wird somit unterbunden. Bei einer Positionierung der Multifunktions-Vorrichtung auf einer Freifläche kann der Bildschirm aufgrund einer bündigen Anordnung zur Oberfläche des Außengefäßes weniger stark verschmutzen bzw. nicht durch Regenwasser beschädigt werden. Außerdem kann durch eine derartige Anordnung des Bildschirms eine optisch ansprechende Multifunktions-Vorrichtung zur Verfügung gestellt werden. Bei der Ausbildung eines gebogenen Flachbildschirms kann der Flachbildschirm beispielsweise flächenbündig auf/in einer gebogenen Oberfläche des Außengefäßes angebracht werden. Außerdem ist es möglich, einen derartig gebogenen Flachbildschirm ebenfalls zur Oberfläche des Außengefäßes bündig (flächenbündig) zu versenken.

Eine weitere Ausführungsform einer Multifunktions-Vorrichtung mit einem Bildschirm ist der Straßenverkehr bzw. ein Straßenverkehrsleitsystem. Die Multifunktions-Vorrichtung kann beispielsweise als temporäres Verkehrsschild dienen. Beispielsweise bei Baustellensituationen ist es möglich, eine derartige Multifunktions-Vorrichtung aufgrund der Ausbildung mit einem integrierten Diesbstahlschutz zu verwenden.

In einer weiteren Ausführungsform der Erfindung kann die stromspeisende Funktionseinheit mindestens eine Solarzelle umfassen. Eine derartige Solarzelle kann vorzugsweise auf dem Außengefäß und/oder auf einer senkrechten Verkleidungsfläche der Multifunktions-Vorrichtung ausgebildet sein. Das Ausbilden einer derartigen Solarzelle hat den Vorteil, dass die Multifunktions-Vorrichtung eine stromgespeiste Funktionseinheit aufweisen kann, wobei diese stromgespeistee Funktionseinheit von der stromspeisenden Funktionseinheit, nämlich der Solarzelle, gespeist werden kann. Demnach ist es möglich, eine Multifunktions-Vorrichtung zur Verfügung zu stellen, die autark von öffentlichen Stromnetzen benutzbar ist.

Vorzugsweise weist die Multifunktions-Vorrichtung in diesem Zusammenhang mindestens eine Speicherbatterie auf. Diese Speicherbatterie kann als Teilelement der stromspeisenden Funktionseinheit ausgebildet sein. Eine derartige Multifunktions-Vorrichtung mit integrierter Solarzelle weist eine besonders bevorzugte Ökobilanz auf. Bei der Solarzelle kann es sich beispielsweise um eine biegbare bzw. eine folienartige Solarzelle handeln. Derartige Solarzellen können auch auf gerundeten bzw. gewölbten Oberflächen eines Außengefäßes angebracht werden. Senkrechte Verkleidungsflächen werden bei der Multifunktions-Vorrichtung insbesondere dann gebildet, wenn die Multifunktions-Vorrichtung mehrere Bepflanzungsetagen aufweist. In einer derartigen Ausführungsform kann/können insbesondere eine Rückwand und/oder eine seitliche Verkleidungsfläche der Bepflanzungs-Etagen-Anordnung als Befestigungsfläche für mindestens eine Solarzelle dienen.

Die stromspeisende Funktionseinheit umfasst des Weiteren mindestens ein Stromlademodul (Steckdose). Ein derartiges Stromlademodul kann insbesondere als Aufladestation für Mobiltelefone oder Fahrzeuge dienen. Insbesondere in öffentlichen Räumen wie z.B. Flughafenterminals kann folglich eine Ladestation für Mobiltelefone bereitgestellt werden, die außerdem der Begrünung von versiegelten Flächen im geschlossenen Raum dient. Je nach Bedarf kann die Multifunktions-Vorrichtung, und somit die Ladestation für Mobiltelefone, an geänderte Bedingungen in dem öffentlichen Raum versetzt werden. Die Versetzung erfolgt aufgrund des Umpositionierens des Außengefäßes der Multifunktions-Vorrichtung.

Des Weiteren ist es möglich, dass mobile Ladestationen für Elektrofahrzeuge oder Hybridfahrzeuge zur Verfügung gestellt werden können. Es ist demnach erfindungsgemäß nicht mehr notwendig, fest im Boden verankerte Ladestationen aufbauen zu müssen. Aufgrund der vorerwähnten Diebstahlsicherung der Multifunktions-Vorrichtung kann eben auch eine mobile Ladestation zur Verfügung gestellt werden. Bei vermehrtem Aufkommen von Elektrofahrzeugen oder Hybridfahrzeugen auf öffentlichen Parkplätzen oder Privatparkplätzen kann mit Hilfe der erfindungsgemäßen Multifunktions-Vorrichtung schnell eine Stromladestation bzw. ein Stromlademodul zur Verfügung gestellt werden, ohne dass Bauarbeiten an versiegelten Flächen, wie z.B. Parkplätzen, vorgenommen werden müssen.

Erfindungsgemäß umfasst die stromgespeiste und/oder stromspeisende Funktionseinheit mindestens eine Abrechnungseinheit und/oder Bezahleinheit, für das Stromlademodul. Demnach ist es möglich, dass mit der erfindungsgemäßen Multifunktions-Vorrichtung nicht nur Stromladevorgänge durchführbar sind, sondern zugleich die durchgeführten Stromladungen abgerechnet und/oder bezahlt werden können. Eine weitere Möglichkeit wäre die Verwendung der Multifunktions-Vorrichtung als Bezahlsystem für Parkgebühren.

Die Bezahleinheit umfasst vorzugsweise ein Kartenlesegerät, so dass Bezahlvorgänge mit EC-Karten und/oder Kreditkarten und/oder Kundenkarten ermöglicht werden.

Des Weiteren ist es möglich, dass die stromgespeiste Funktionseinheit ein Beleuchtungssystem umfasst. Das Beleuchtungssystem umfasst vorzugsweise mindestens eine LED. Es kann demnach ein Beleuchtungssystem bzw. Lichtsystem zur Verfügung gestellt werden, das beispielsweise nachts bzw. im Dunklen eine Beleuchtung ermöglicht, wobei tagsüber bzw. im Hellen eine optisch ansprechende Begrünung von versiegelten Flächen ermöglicht wird.

Das Beleuchtungssystem kann beispielsweise derart ausgebildet sein, dass die Multifunktions-Vorrichtung als Beleuchtungskörper ausgebildet ist. Beispielsweise kann eine Multifunktions-Vorrichtung, die ein Beleuchtungssystem umfasst, zur Verkehrsleitung dienen. Des Weiteren ist es möglich, dass eine derartige Multifunktions-Vorrichtung eine Straßenlampe ersetzt. Hierbei ist es möglich, dass die Multifunktions-Vorrichtung eine temporäre Straßenlampe bildet, sofern eine reguläre Straßenlampe beschädigt oder defekt ist. Alternativ hierzu ist es möglich, dass die Multifunktions-Vorrichtung als reguläre Straßenlampe dient, ohne dass Bodenbauarbeiten notwendig sind. Eine derartige Multifunktions-Vorrichtung mit Beleuchtungssystem kann an wahlweisen Positionen aufgestellt werden. Dies erleichtert auch sonst langwierige Genehmigungsverfahren bezüglich Straßenlampen.

Die Multifunktions-Vorrichtung kann an einem/dem Boden des Außengefäßes bzw. an einem/dem Außengefäßboden Rollen aufweisen. Derartige Rollen sind vorzugsweise versenkbar ausgebildet. Die Rollen dienen dem leichteren Transport der Multifunktions-Vorrichtung. Durch ein Versenken der Rollen kann bei Erreichen einer Endposition wiederum ein Diebstahlschutz realisiert werden. Vorzugsweise können die versenkten Rollen verschlossen werden bzw. in ihrer versenkten Position verrastet werden. Eine Multifunktions-Vorrichtung mit Rollen ist vorzugsweise mit im Wesentlichen geschlossenen Räumlichkeiten verwendbar, in denen nicht von einem Diebstahl der Multifunktions-Vorrichtung auszugehen ist.

Des Weiteren ist es möglich, dass die mindestens eine stromgespeiste und/oder die mindestens eine stromspeisende Funktionseinheit in einem vom Pflanzgefäß separierten Gehäuse angeordnet ist. Vorzugsweise ist das separierte Gehäuse wasserdicht ausgebildet. Dies verhindert die Beschädigung der stromgespeisten und/oder stromspeisenden Funktionseinheit durch Gießwasser. Es kann demnach eine Multifunktions-Vorrichtung gebildet sein, wobei ein bezüglich des Pflanzgefäßes externes Gehäuse zur Unterbringung der stromgespeisten und/oder stromspeisenden Funktionseinheit dient. Beim Austausch von Pflanzen bzw. bei der Pflege der Pflanzen muss demnach nicht mit erhöhter Vorsicht vorgegangen werden.

Außerdem kann durch Ausbildung eines separierten Gehäuses die stromgespeiste und/oder die stromspeisende Funktionseinheit einfach ausgetauscht und/oder durch eine weitere stromgespeiste und/oder stromspeisende Funktionseinheit erweitert werden.

In einer weiteren Ausführungsform der Erfindung kann das separierte Gehäuse staubdicht ausgebildet sein. Eventuelle Staubverwirbelungen bzw. aufgewühlte Schmutzpartikel durch Umpflanzvorgänge und/oder Pflanzenpflege können demnach nicht in das Gehäuse der stromgespeisten und/oder stromspeisenden Funktionseinheit eindringen. Eine Beschädigung durch Staub und/oder Schmutz wird dadurch verhindert.

Des Weiteren ist es möglich, dass die Multifunktions-Vorrichtung mehrere Pflanzgefäße und/oder mehrere Kulturtöpfe aufweist, die auf mehreren vertikal versetzten Etagen angeordnet sind. Eine derartige Multifunktions-Vorrichtung kann somit eine Pflanzenwand bilden. Mit anderen Worten wird eine Wandbegrünungsvorrichtung im Sinne einer Pflanzentreppe ausgebildet. Auf einer Etage können mehrere Pflanzgefäße und/oder mehrere Kulturtöpfe ausgebildet sein. In einer bevorzugten Ausführungsform der Erfindung ist auf jeweils einer Etage jeweils ein Pflanzgefäß mit mehreren Kulturtöpfen ausgebildet. Oberhalb der letzten Etage kann vorzugsweise eine Befestigungsfläche für beispielsweise einen Bildschirm ausgebildet sein. An der Rückseite der vertikal versetzten Etagen kann beispielsweise eine Verkleidungsfläche ausgebildet sein. Eine derartige Verkleidungsfläche kann als Befestigungsvorrichtung für mindestens eine Solarzelle dienen.

Die stromgespeiste Funktionseinheit kann mindestens ein Funkmodul umfassen. Bei dem Funkmodul kann es sich insbesondere um ein Bluetooth-Modul oder um ein Wireless-LAN-Modul handeln. In öffentlichen Räumen können demnach Passanten oder Besuchern in einem Flughafenterminal, beispielsweise Flugreisenden, WLAN-Hotspots angeboten werden. Es ist möglich, dass das Funkmodul die Daten eines Wasserstandsensors/Wasserstandanzeigers im Pflanzgefäß empfängt. Die Daten des Wasserstandsensors können demnach an eine Leitstelle gefunkt werden. Es ist daher möglich, dass kritische Wasserstände im Pflanzgefäß an eine Leitstelle gesendet, insbesondere gefunkt, werden. Anschließend kann ein entsprechender Bewässerungsvorgang veranlasst werden. Des Weiteren ist es denkbar, dass das Funkmodul Daten eines Mineralien-Sensors im Pflanzgefäß empfängt. Auch diesbezüglich ist ein Weiterleiten der Daten, insbesondere ein Funken, der empfangenen Mineralien-Daten an eine Leitstelle möglich. Die Leitstelle kann anhand der gemessenen Mineralienkonzentrationen beispielsweise eine Düngung der Pflanzen veranlassen.

Die Multifunktions-Vorrichtung kann einen Netzstecker, insbesondere ein Stromkabel mit einem Netzstecker umfassen, so dass die Multifunktions-Vorrichtung an ein Stromnetz anschließbar ist. Demnach kann eine stromgespeiste Funktionseinheit durch das Stromnetz versorgt werden. Des Weiteren ist es möglich, dass die Multifunktions-Vorrichtung eine Stromspeichereinrichtung mit mindestens einer aufladbaren Batterie umfasst. Es ist möglich, die aufladbare Batterie durch ein Stromnetz zu speisen und bei anschließend aufgeladener Batterie die stromgespeiste Funktionseinheit der Multifunktions-Vorrichtung entsprechend zu versorgen. In einer weiteren Ausführungsform der Erfindung kann die Multifunktions-Vorrichtung eine Netzbuchse umfassen, so dass ein Stromladekabel an die Netzbuchse anschließbar ist, und somit beispielsweise ein Aufladevorgang der von der Multifunktions-Vorrichtung umfassten wiederaufladbaren Batterie möglich ist.

Das Pflanzgefäß und/oder das Außengefäß der Multifunktions-Vorrichtung kann/können in jeder Form und Größe sowie aus beliebigen Werkstoffen gefertigt sein. Das Außengefäß und/oder das Pflanzgefäß kann/können beispielsweise eine zylindrische Form oder die Form eines Quaders aufweisen.

Eventuell benötigte Versorgungsschnittstellen für Strom und/oder Wasser können an beliebigen Stellen des Außengefäßes ausgebildet sein. Die Multifunktions-Vorrichtung kann hinsichtlich der Bepflanzung als Bodengefäß, oder als Wandbegrünungsgefäß oder als schwimmendes Gefäß, oder als im Erdreich versenkbares Gefäß konstruiert sein.

Insgesamt kann mit Hilfe der erfindungsgemäßen Multifunktions-Vorrichtung eine Begrünung von versiegelten Flächen in Freiräumen und Räumen, wie z.B.

Fußgängerzonen in Städten, Gehwegen, Parkplätzen, Straßen, Flughafenterminals, Eingangshallen usw. platzsparend, schnell, kostengünstig und einfach handzuhabend zur Verfügung gestellt werden, wobei eine zusätzliche Funktion mit mindestens einem stromgespeisten und/oder stromspeisenden Funktionseinheit ermöglicht wird.

Bei der Begrünung mit einer Multifunktions-Vorrichtung reduziert sich der sonst übliche Wasserverbrauch für Begrünungen um bis zu 80 %. Entsprechend wird der damit verbundene Gieß- und Wartungsaufwand ebenfalls reduziert. Die Wasserressourcen werden nachhaltig geschont. Außerdem wird die Feinstaubbelastung reduziert, und gesunde Luft zum Atmen zur Verfügung gestellt.

Aufgrund der beschriebenen Ausbildung des Pflanzgefäßes kann ein schneller Austausch von Kulturtöpfen und/oder Pflanzen ermöglicht werden. Des Weiteren ist es möglich, Pflanzen in öffentlichen Räumen und/oder in Gebäuden von Unternehmen an die jeweilige Jahreszeit entsprechend anzupassen und auszutauschen.

Ein weiterer erfindungsgemäßer Gedanke besteht darin, eine Multifunktions-Vorrichtung zum Halten von Pflanzen mit mindestens einem Pflanzgefäß anzugeben, wobei die Multifunktions-Vorrichtung eine beklebbare und/oder beschriftbare Fläche, insbesondere eine Werbefläche, umfasst. Eine derartige Multifunktions-Vorrichtung kann in Art einer Litfasssäule ausgebildet sein, wobei oberhalb und/oder unterhalb der Litfasssäule ein Pflanzgefäß ausgebildet ist.

Des Weiteren ist es möglich, dass die beklebbare und/oder beschriftbare Fläche als im Wesentlichen plane und/oder senkrechte Plakatfläche/Plakatwand ausgebildet ist. Die Plakatfläche/Plakatwand kann oberhalb und/oder unterhalb des Pflanzgefäßes ausgebildet sein.

Vorzugsweise ist das Pflanzgefäß als Hydrokulturpflanzgefäß ausgebildet. Insbesondere weist das Pflanzgefäß einen Kulturtopf und ein Positionierungselement auf. Besonders bevorzugt sind das Pflanzgefäß, das Positionierungselement und der Kulturtopf derart ausgebildet, wie dies im Zusammenhang mit den Ansprüchen 2 und/oder 3 angegeben ist.

Im Folgenden werden anhand schematischer Zeichnungen Ausführungsbeispiele der Erfindung näher erläutert.

Es zeigen:
- Fig. 1: eine schematische Querschnittsdarstellung eines Pflanzgefäßes einer erfindungsgemäßen Multifunktions-Vorrichtung;
- Fig. 2: eine erste Ausführungsform einer Multifunktions-Vorrichtung;
- Fig. 3: eine Ausführungsform der Multifunktions-Vorrichtung als Wandbegrünungsgefäß;
- Fig. 4: eine Prinzipdarstellung hinsichtlich der Anordnung der einzelnen Bauteile der Multifunktions-Vorrichtung;
- Fig. 5: eine weitere Ausführungsform der Multifunktions-Vorrichtung als Wandbegrünungsfläche;
- Fig. 6: eine schematische Darstellung hinsichtlich der Anordnung der einzelnen Elemente einer Multifunktions-Vorrichtung;

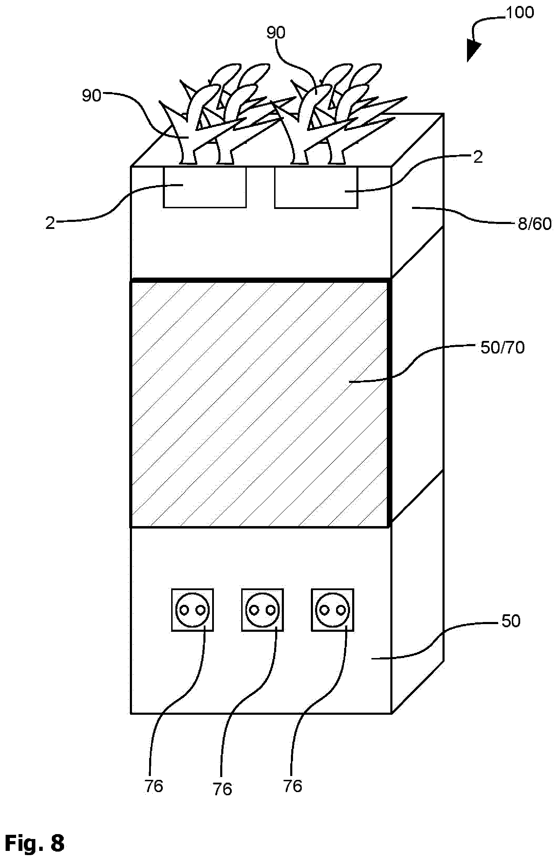

- Fig. 7 und 8: weitere Ausführungsformen der Multifunktions-Vorrichtung.

In der nachfolgenden Beschreibung werden für gleiche und gleichwirkende Teile dieselben Bezugsziffern verwendet.

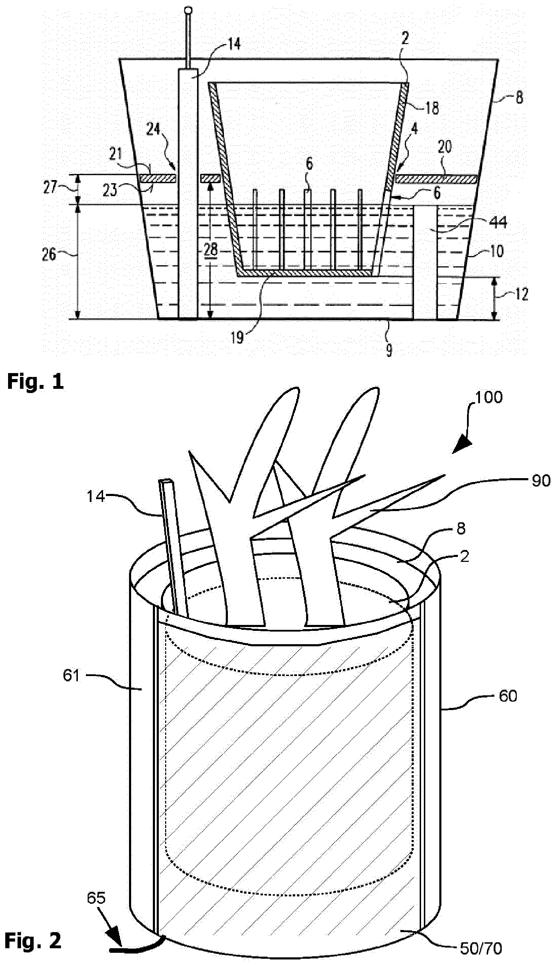

Fig. 1 zeigt eine Vorrichtung 1 zum Kultivieren und Halten von Pflanzen in einem organischen oder anorganischen Substrat für Pflanzgefäße zur Herstellung eines Vegetationsraums in einer schematischen Querschnittsdarstellung gemäß einem ersten Ausführungsbeispiel.

Der Schnitt zeigt ein Positionierungselement 20 und einen Kulturtopf 2, der mehrere Bewässerungs- und Wurzelwachstumsöffnungen 6 aufweist. Die Öffnungen 6 dienen zur Bewässerung und insbesondere als Wurzelwachstumsöffnungen. So kann die Pflanze Wurzeln und insbesondere Nährstoffwurzeln ausbilden, die den gesamten Vegetationsraum 28 ausfüllen können. Der Kulturtopf 2 ist im Positionierungselement 20 mit der Kulturtopföffnung 4 im Positionierungselement 20 eingehängt. Insbesondere ist der Kulturtopf 2 mit dem Positionierungselement 20 in der Kulturtopföffnung 4 form- und/oder kraftschlüssig verbunden.

In den Kulturtopf 2 kann organisches, anorganisches oder gemischtes Substrat eingefüllt werden. Die Substrate haben die Aufgabe, den Pflanzenwurzeln Halt zu geben und die Pflanze aufrecht zu halten. Der Kulturtopf 2 weist mehrere Bewässerungs- und Wurzelwachstumsöffnungen 6 auf. Die Bewässerungs- und Wurzelwachstumsöffnungen 6 können rund, oval, rechteckig oder schlitzförmig ausgeführt sein. Die Bewässerungs- und Wurzelwachstumsöffnungen 6 befinden sich auf dem Kulturtopfboden 19 und/oder im Kulturtopfmantel 18 des Kulturtopfes 2.

Weiter zeigt die Fig. 1 ein Pflanzgefäß 8. Das Pflanzgefäß 8 ist mit dem Positionierungselement 20 verbunden. Das Positionierungselement 20 hat eine Außenseite 21 und eine Innenseite 23. Der Kulturtopf 2 hat einen Kulturtopfboden 19 und einen Kulturtopfmantel 18. Das Pflanzgefäß 8 hat einen Pflanzgefäßboden 9 und einen Pflanzgefäßmantel 10. Ein Höhenabstand 12 entsteht durch den Abstand zwischen dem Kulturtopfboden 19 und dem Pflanzgefäßboden 9 des Pflanzgefäßes 8. Der Höhenabstand 12 beträgt mindestens 1 cm. Eine Füllhöhe 26 zeigt die Wasserstandshöhe von eingefülltem Wasser oder wässeriger Nährlösung mit maximaler Höhe. Der Raum unterhalb des Positionierungselementes 20 teilt sich in einen wasserführenden Bereich mit einer Wasserstandshöhe 26 die in der Fig. 1 einer maximalen Füllhöhe entspricht, die durch den Gefäßüberlauf 44 definiert wird. Der Gefäßüberlauf 44 bietet insbesondere beim Einsatz im Freien oder bei Verwendung von Bewässerungsanlagen den Vorteil, dass eine Überwässerung ausgeschlossen wird und die maximale Füllhöhe nicht überschritten wird.

Ein Atmosphären-Bereich mit der Höhe 27 ergibt sich aus der Wasserstandshöhe 26 und dem Abstand zum Positionierungselement 20. Der Atmosphären-Bereich 27 vergrößert oder reduziert sich entsprechend der Wasserstandshöhe 26. Die Füllmenge an Wasser (Wasserstandshöhe) richtet sich nach der Höhe der Bewässerungs- und Wurzelwachstumsöffnungen 6, dem verwendeten Füllmaterial im Kulturtopf 2, dem Abstand Kulturtopfboden 19 zum Pflanzgefäßboden 9, der Größe des Pflanzgefäßes 8 und ist abhängig von der Kulturtopfgröße und der Größe der Pflanze.

Des Weiteren weist das Positionierungselement 20 mindestens eine Wasserstandsanzeigeröffnung 24 auf. Die Wasserstandsanzeigeröffnung 24 dient zum Positionieren und Halten eines Wasserstandsanzeigers 14. Der Wasserstandsanzeiger 14 kann von oben in die Wasserstandsanzeigeröffnung 24 eingeführt werden. Der Wasserstandsanzeiger 14 reicht bis auf den Pflanzgefäßboden 9 des Pflanzgefäßes 8. Der Wasserstandsanzeiger 14 kann als Wasserstandssensor ausgebildet sein.

Das Positionierungselement 20 ist als geschlossene Scheibe ausgeführt. Weiter ist das Positionierungselement 20 aus einem korrosionsfesten Metall oder Edelstahl ausgebildet. Dies bietet den Vorteil, dass sich unterhalb des Positionierungselementes 20 ein hervorragendes Wachstumsklima mit genügend Sauerstoff und hoher Luftfeuchtigkeit bildet, das zu einem optimalen Wurzelwachstum führt. Weiter kann die Verbindung zwischen Pflanzgefäß 8, Positionierungselement 20 sowie Wasserstandsanzeiger 14 luftdicht ausgeführt sein. Dies führt dazu, dass verwendetes Füllmaterial oberhalb der Vegetationsscheibe 20 trocken bleibt, wodurch Salzausblühungen oder Verfärbungen des Füllmaterials verhindert werden. Üblicherweise wird als Füllmaterial Zierkies verwendet, jedoch ist auch jedes andere optisch ansprechende Füllmaterial anwendbar. Dadurch dass sich im Vegetationsraum 28, der sich aus dem Atmosphären-Bereich 27 und dem wasserführenden Bereich 26 zusammensetzt, kein Substrat befindet, wird die Wasserfüllmenge wesentlich erhöht. Der Vegetationsraum 28 erstreckt sich vom Pflanzgefäßboden 9 des Pflanzgefäßes 8 bis zum Positionierungselement 20.

Das für die Kultivierung von Pflanzen nötige Gießintervall, also der zeitliche Abstand zwischen dem für das optimale Pflanzenwachstum notwendigem Gießen, wird dadurch wesentlich verlängert. In der Praxis konnte das notwendige Gießintervall mindestens um das 5-fache zu den Gießintervallen der derzeit marktüblichen Pflanzsysteme erhöht werden und verkürzt sich im Laufe der Zeit aufgrund fehlender Massenverdichtung nur unwesentlich. Durch die Einsparung von Substrat wird die Arbeitszeit für die Bepflanzung von Pflanzenarrangements wesentlich verkürzt.

Aufgrund dessen, dass der Kulturtopf 2 nicht unmittelbar auf dem Pflanzgefäßboden 9 des Pflanzgefäßes 8 steht, kann keine Staunässe entstehen. Infolge von Staunässe kommt es häufig zu Sauerstoffmangel und damit verbunden zu Wurzelfäulnis. Weiter können sich Schwemmstoffe, die regelmäßig beim Düngen und Gießen freigesetzt werden, ohne nachteilige Wirkung am Pflanzgefäßboden 9 des Pflanzgefäßes 8 absetzen. Ein Zusetzen der Bewässerungs- und Wurzelwachstumsöffnungen 6 entsteht nicht. Weiter kann das Positionierungselement 20 semipermeabel oder membranartig ausgeführt und insbesondere in Richtung des Vegetationsraumes 28 luftdurchlässig und in entgegengesetzter Richtung wasserundurchlässig, vor allem undurchlässig gegenüber Verdunstung, ausgeführt sein.

Grundsätzlich resultiert aus der dargestellten Anordnung ein verbessertes Wachstumsklima im Vegetationsraum 28, mit einer entsprechenden Luftfeuchtigkeit. Weiter resultiert im Vegetationsbereich eine gute Durchlüftung des Wurzelwerks und ermöglicht eine gute Kulturtopf-Bodenbelüftung. Wasser, insbesondere eine wässerige Nährlösung, kann über die Bewässerungs- und Wurzelwachstumsöffnung 6 bis in den Kulturtopf 2 gelangen. Über die Luftfeuchtigkeit im Vegetationsraum 28 sowie über die Nährlösung ist ein idealer Ausgleich des Wasserhaushalts der Pflanze möglich.

In Fig. 2 wird eine erste Ausführungsform der Multifunktions-Vorrichtung 100 zum Halten von Pflanzen 90 dargestellt. Diese Multifunktions-Vorrichtung umfasst zunächst das Pflanzgefäß 8 sowie ein Außengefäß 60. In dem Außengefäß 60 ist das Pflanzgefäß 8 positioniert. Sowohl das Pflanzgefäß 8 als auch das Außengefäß 60 sind zylindrisch ausgebildet. Ebenfalls zu erkennen ist ein Wasserstandsanzeiger 14. Die Multifunktions-Vorrichtung 100 weist eine stromgespeiste Funktionseinheit 50 auf. In diesem Fall handelt es sich um einen Bildschirm 70. Der Bildschirm 70 ist am Außengefäß 60 befestigt. Insbesondere ist der Bildschirm 70 an der Oberfläche 61 des Außengefäßes 60 befestigt. Der Bildschirm 70 ist als gebogener Flachbildschirm ausgebildet und am Außengefäß 60 derart angeordnet, dass der Flachbildschirm 70 in Relation zur Oberfläche 61 flächenbündig versenkt ausgebildet ist. Die Oberfläche 61 des Außengefäßes 60 und der Bildschirm 70 bilden somit eine nahezu durchgängige Oberfläche. Der Bildschirm 70 steht damit nicht vom Außengefäß 60 ab. Eine an der Multifunktions-Vorrichtung 100 vorbeigehende Person kann sich somit nicht von der Vorrichtung 100 Abstehendem bzw. Vorstehendem verhaken.

Eine Multifunktions-Vorrichtung 100, wie diese in Fig. 2 dargestellt ist, insbesondere zur Positionierung in Betriebsgebäuden oder Flughafenterminals geeignet. Auf dem Bildschirm 70 können beispielsweise Weginformationen angezeigt werden. Des Weiteren kann die Multifunktions-Vorrichtung 100 als Werbefläche dienen. Die Vorrichtung 100 umfasst des Weiteren ein Stromkabel 65, so dass die stromgespeiste Funktionseinheit 50 mit Strom aus dem Stromnetz versorgt werden kann.

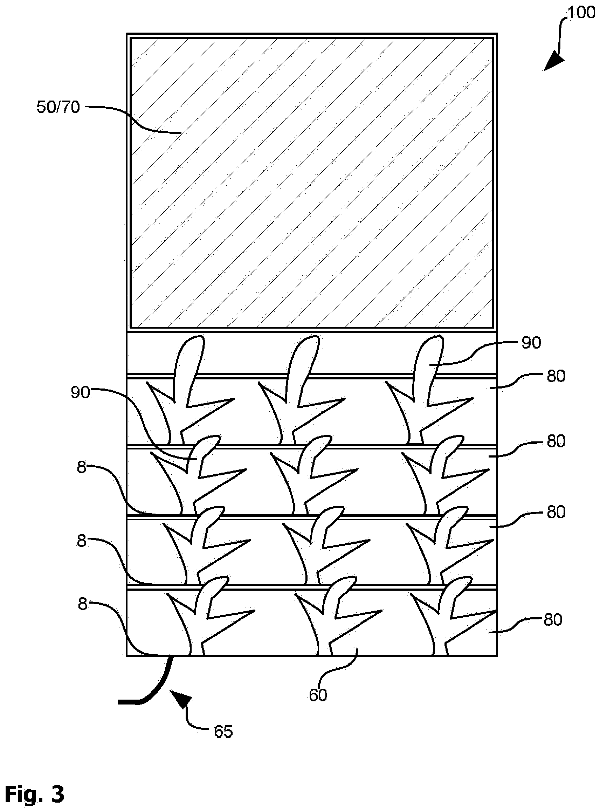

In Fig. 3 wird eine weitere Multifunktions-Vorrichtung 100 dargestellt. Diese ist als Wandbegrünungsfläche ausgebildet. Es sind mehrere vertikal versetzte Etagen 80 ausgebildet. Im dargestellten Beispiel umfasst jede Etage 80 ein Pflanzgefäß 8 mit mehreren darin ausgebildeten Kulturtöpfen 2. Die stromgespeiste Funktionseinheit 50 ist gemäß Ausführungsform der Fig. 3 wiederum als Bildschirm 70 ausgebildet. Der Bildschirm 70 ist auf einer in vertikaler Richtung oberhalb des Außengefäßes 60, das im vorliegenden Beispiel durch das Pflanzgefäß 8 gebildet ist, angebracht. Bei der Befestigungsvorrichtung handelt es sich um eine Befestigungsfläche.

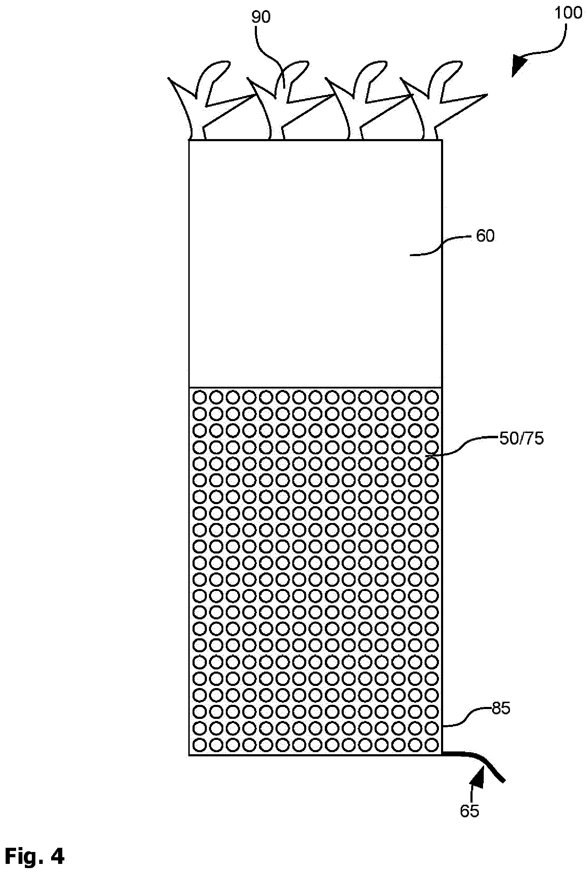

In Fig. 4 wird verdeutlicht, dass die Multifunktions-Vorrichtung 100 zum Halten von Pflanzen 90 in mehrere Abschnitte unterteilt ist. In einem oberen Abschnitt ist das Außengefäß 60 mit dem darin befindlichen Pflanzgefäß 8 ausgebildet. Darunter befindet sich ein vom Pflanzgefäß separiertes Gehäuse 85. Das Gehäuse 85 umfasst die stromgespeiste Funktionseinheit 50. Diese wird über das dargestellte Stromkabel 65 mit Strom versorgt. Auf dem Gehäuse 85 ist die stromgespeiste Funktionseinheit 50 in Form eines Beleuchtungssystems 75 ausgebildet. Dieses Beleuchtungssystem umfasst ein LED-Array. Vorzugsweise ist das Beleuchtungssystem 75 im dargestellten Beispiel vollumfänglich ausgebildet. Eine derartige Beleuchtung kann beispielsweise als Verkehrsleitsystem dienen.

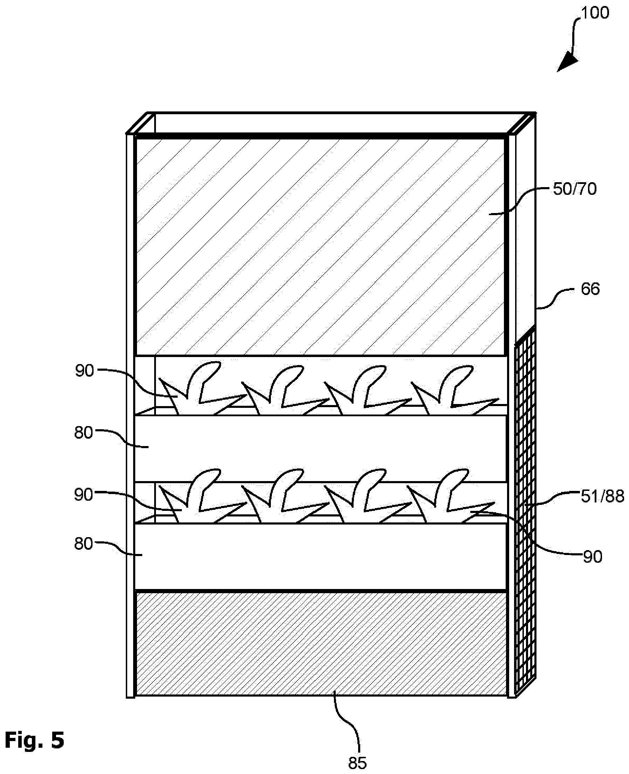

Die Fig. 5 zeigt eine Multifunktions-Vorrichtung 100, die der Multifunktions-Vorrichtung 100 der Fig. 3 ähnelt. Es ist wiederum eine stromgespeiste Funktionseinheit 50 als Bildschirm 70 ausgebildet, wobei darunter mehrere Etagen 80 mit Pflanzgefäßen 8 ausgebildet sind. Die Vorrichtung 100 weist eine seitliche Verkleidungsfläche 66 auf. Diese Verkleidungsfläche erstreckt sich über die komplette Bauteilhöhe der Vorrichtung 100. Auf der Verkleidungsfläche 66 ist eine stromspeisende Funktionseinheit 51 in Form von Solarzellen 88 ausgebildet.

Die Multifunktions-Vorrichtung 100 umfasst des Weiteren ein Gehäuse 85, in dem zumindest vereinzelte Teile der stromspeisenden Funktionseinheit 51 befindlich sind. Dabei handelt es sich um die zu ladenden Batterien. Die Batterien können durch mittels der Solarzellen 88 erzeugten Strom aufgeladen werden. Der geladene Strom dient zur Stromversorgung der stromgespeisten Funktionseinheit 50, nämlich des Bildschirms 70. Das Gehäuse 85 ist wasserdicht ausgebildet. Demnach kann ein Gießvorgang der über dem Gehäuse 85 befindlichen Blumenetagen 80 problemlos durchgeführt werden. Es kann zu keinen Kurzschlüssen in Zusammenhang mit der im Gehäuse 85 befindlichen elektrischen Schaltung sowie der darin befindlichen Batterie kommen. Die Multifunktions-Vorrichtung 100 der Fig. 5 umfasst folglich sowohl eine stromgespeiste Funktionseinheit 50, als auch eine stromspeisende Funktionseinheit 51.

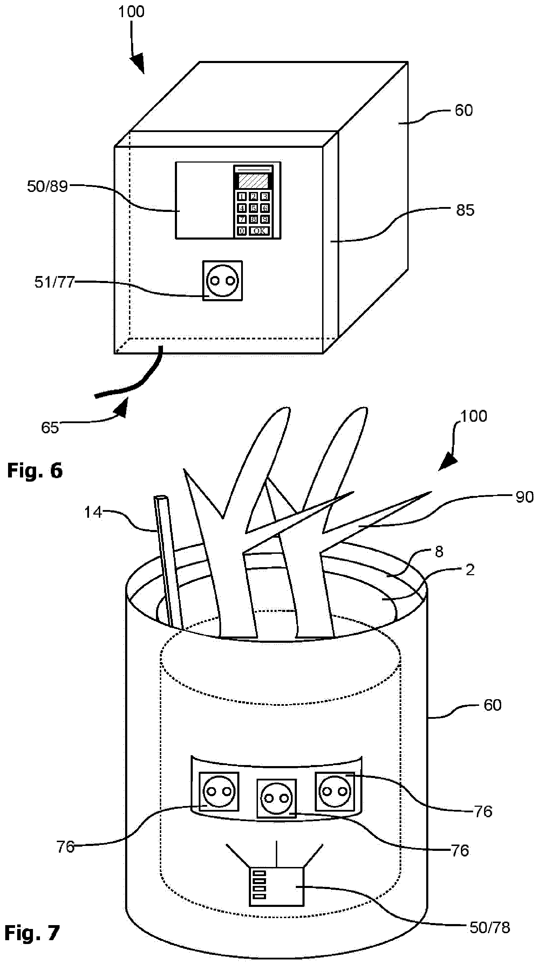

In Fig. 6 ist schematisch eine weitere Multifunktions-Vorrichtung 100 dargestellt. Das Außengefäß 60 umfasst ein Pflanzgefäß 8. Des Weiteren ist eine stromspeisende Funktionseinheit 50 dargestellt. Bei dieser stromspeisenden Funktionseinheit 51 handelt es sich um ein Stromlademodul 77 für Elektrofahrzeuge. Ebenfalls zu erkennen ist ein Stromkabel 65, das zur Stromversorgung der Multifunktions-Vorrichtung 100 dient.

Die Multifunktions-Vorrichtung 100 umfasst des Weiteren eine stromgespeiste Funktionseinheit 50. Diese ist als Bezahleinheit 89 ausgebildet. Die Bezahleinheit 89 umfasst vorzugsweise ein Kartenlesegerät, so dass der von einem Elektrofahrzeug geladene Strom beispielsweise mittels EC-Karte oder Kreditkarte bzw. mit einer Kundenkarte bezahlt werden kann. Sowohl die stromgespeiste Funktionseinheit 50, als auch die stromspeisende Funktionseinheit 51 sind in einem vom Außengefäß 60 separierten Gehäuse 85 ausgebildet.

In Fig. 7 ist eine Multifunktions-Vorrichtung 100 dargestellt, die eine zylindrische Grundform aufweist. Die Multifunktions-Vorrichtung 100 umfasst eine stromgespeiste Funktionseinheit 50. Diese Einheit ist als Funkmodul 78 ausgebildet. Das Funkmodul 78 empfängt Daten des im Pflanzgefäß 8 befindlichen Wasserstandsanzeigers 14. Mit Hilfe des Funkmoduls 78 ist es demnach möglich, die Daten des Wasserstandsanzeigers 14 an eine Leitstelle zu funken. Sofern der Wasserstand innerhalb des Pflanzgefäßes 8 kritisch ist, kann demnach ein Gießvorgang veranlasst werden. Das Funkmodul kann außerdem ein Bluetooth-Modul oder ein Wireless-LAN-Modul sein. Demnach ist es möglich, mit der Multifunktions-Vorrichtung 100 einen WLAN-Hotspot zur Verfügung zu stellen.

In Fig. 7 ist eine Multifunktions-Vorrichtung 100 dargestellt, die im Wesentlichen eine Quaderform aufweist. Das Pflanzgefäß 8 bildet in diesem Beispiel das Außengefäß 60. Im Pflanzgefäß 8 sind vorliegend zwei Kulturtöpfe 2 mit darin befindlichen Pflanzen 90 ausgebildet. Unterhalb des Bereiches mit den Kulturtöpfen 6 ist auf dem Außengefäß 60 die stromgespeiste Funktionseinheit 50, nämlich ein Bildschirm 70 ausgebildet. Der Bildschirm 70 ist auf der Oberfläche des Außengefäßes 60 angebracht. Des Weiteren umfasst die Multifunktions-Vorrichtung 100 eine weitere stromgespeiste Funktionseinheit 50, nämlich eine Einheit mit mehreren Steckdosen 76. Die Steckdosen 76 können insbesondere zur Ladung von Mobiltelefonen verwendet werden.

### Bezugszeichenliste

- 2: Kulturtopf
- 4: Kulturtopföffnung
- 6: Bewässerungsöffnung/Wurzelwachstumsöffnung
- 8: Pflanzgefäß
- 9: Pflanzgefäßboden
- 10: Pflanzgefäßmantel
- 12: Höhenabstand
- 14: Wasserstandsanzeiger
- 18: Kulturtopfmantel
- 19: Kulturtopfboden
- 20: Positionierungselement
- 21: Außenseite des Positionierungselements
- 23: Innenseite des Positionierungselements
- 24: Wasserstandsanzeigeröffnung
- 26: Wasserstandshöhe
- 27: Höhe des Atmosphärenbereichs
- 28: Vegetationsraum
- 44: Gefäßüberlauf
- 50: Stromgespeiste Funktionseinheit
- 51: Stromspeisende Funktionseinheit
- 60: Außengefäß
- 61: Oberfläche
- 65: Stromkabel
- 66: Verkleidung
- 70: Bildschirm
- 75: Beleuchtungssystem
- 76: Steckdose
- 77: Stromlademodul
- 78: Funkmodul
- 80: Etage
- 85: Gehäuse
- 88: Solarzelle
- 89: Bezahleinheit
- 90: Pflanze
- 100: Multifunktions-Vorrichtung

## Patentansprüche

1. Multifunktions-Vorrichtung (100) zum Halten von Pflanzen (90) mit mindestens einem Pflanzgefäß (8), umfassend
ein Positionierungselement (20), in welches wenigstens ein Kulturtopf (2), der einen Kulturtopfmantel (18) und einen Kulturtopfboden (19) aufweist, derart einsetzbar und befestigbar ist, dass das Positionierungselement (20) zusammen mit dem Kulturtopf (2) derart in das Pflanzgefäß (8) einsetzbar ist, dass unterhalb des Positionierungselements (20) ein im Wesentlichen abgedichteter Atmosphärenbereich (27) und ein Vegetationsraum (28) gebildet sind, in welchen ein unterer Abschnitt des Kulturtopfes (2) ragt, wobei das Positionierungselement (20) derart ausgebildet ist, dass der Kulturtopfboden (19) in einem Höhenabstand (12) zu einem Boden (9) des Pflanzgefäßes (8) positionierbar ist, **gekennzeichnet durch**
mindestens ein Stromlademodul (77) für Fahrzeuge und mindestens eine Abrechnungseinheit und/oder Bezahleinheit (89) für das Stromlademodul (77).

2. Multifunktions-Vorrichtung (100) nach Anspruch 1,
**dadurch gekennzeichnet, dass**
das Positionierungselement (20) als ein Blech oder Flächenelement, insbesondere als ein im Wesentlichen geschlossenes Blech oder Flächenelement zur Verstärkung einer Kondensatbildung, das insbesondere aus einem gut wärmeleitenden Material gebildet ist, gefertigt ist.

3. Multifunktions-Vorrichtung (100) nach einem der Ansprüche 1 bis 2, **gekennzeichnet durch**
ein Außengefäß (60), das durch das Pflanzgefäß (8) gebildet ist oder in dem das Pflanzgefäß (8) positioniert ist.

4. Multifunktions-Vorrichtung (100) nach einem der Ansprüche 1 bis 3, **dadurch gekennzeichnet, dass**
eine stromgespeiste Funktionseinheit (50) mindestens einen Bildschirm (70) umfasst.

5. Multifunktions-Vorrichtung (100) nach Anspruch 4,
**dadurch gekennzeichnet, dass**
der Bildschirm (70) auf einer in vertikaler Richtung oberhalb eines/des Außengefäßes (60) befindlichen Befestigungsvorrichtung und/oder zur Oberfläche (61) des Außengefäßes (60) bündig versenkt, befestigt ist.

6. Multifunktions-Vorrichtung (100) nach einem der Ansprüche 3 bis 5, **dadurch gekennzeichnet, dass**
die stromspeisende Funktionseinheit (51) mindestens eine Solarzelle (88) umfasst, die auf dem Außengefäß (60) und/oder auf einer senkrechten Verkleidungsfläche (66) der Vorrichtung ausgebildet ist.

7. Multifunktions-Vorrichtung (100) nach einem der vorhergehenden Ansprüche,
**dadurch gekennzeichnet, dass**
eine stromgespeiste Funktionseinheit (51) ein Beleuchtungssystem (75) umfasst.

8. Multifunktions-Vorrichtung (100) nach einem der Ansprüche 3 bis 7, **gekennzeichnet durch**
an dem Außengefäßboden ausgebildete Rollen, die vorzugsweise versenkbar ausgebildet sind.

9. Multifunktions-Vorrichtung (100) nach einem der vorhergehenden Ansprüche,
**dadurch gekennzeichnet, dass**
mindestens eine stromgespeiste (50) und/oder stromspeisende Funktionseinheit (51) zumindest teilweise in einem vom Pflanzgefäß (8) separierten Gehäuse (85), das wasserdicht ausgebildet ist, angeordnet ist.

10. Multifunktions-Vorrichtung (100) nach einem der vorhergehenden Ansprüche,
**gekennzeichnet durch**
mehrere Pflanzgefäße (8) und/oder mehrere Kulturtöpfe (6) die auf mehreren vertikal versetzten Etagen (80) angeordnet sind.

11. Multifunktions-Vorrichtung (100) nach einem der vorhergehenden Ansprüche,
**dadurch gekennzeichnet, dass**
eine stromgespeiste Funktionseinheit (50) mindestens ein Funkmodul (78) umfasst.

## Claims

1. Multifunctional device (100) for holding plants (90) by means of at least one planting receptacle (8), comprising
a positioning element (20), into which at least one culture pot (2) having a culture pot envelope (18) and a culture pot bottom (19) is insertable and attachable such that the positioning element (20) together with the culture pot (2) is insertable into the planting receptacle (8) such that, below the positioning element (20), an essentially tight atmospheric area (27) and a vegetation space (28) are formed, into which a lower portion of the culture pot (2) protrudes, wherein the positioning element (20) is formed such that the culture pot bottom (19) can be positioned at a height distance (12) to a bottom (9) of the planting receptacle (8),
**characterized by**
at least one current charging module (77) for vehicles, and at least one accounting unit and/or payment unit (89) for the current charging module (77).

2. Multifunctional device (100) according to claim 1,
**characterized in that**
the positioning element (2) is manufactured as a sheet metal or areal element, in particular as an essentially closed sheet metal or areal element, in particular made of a material with good thermal conductivity, for reinforcing condensate formation.

3. Multifunctional device (100) according to any one of claims 1 to 2, **characterized by**
an outer receptacle (6) being formed by the planting receptacle (8) or in which the planting receptacle (8) is positioned.

4. Multifunctional device (100) according to any one of claims 1 to 3, **characterized in that**
a current-fed functional unit (50) comprises at least one screen (70).

5. Multifunctional device (100) according to claim 4,
**characterized in that**
the screen (70) is attached on an attachment device situated in the vertical direction above an/the outer receptacle (60) and/or so as to be flush to the surface (61) of the outer receptacle (60).

6. Multifunctional device (100) according to any one of claims 3 to 5,
**characterized in that**
the current-feeding functional unit (51) comprises at least one solar cell (88) formed on the outer receptacle (60) and/or on a vertical cladding surface (66) of the device.

7. Multifunctional device (100) according to any one of the preceding claims, **characterized in that**
the current-feeding functional unit (51) comprises an illumination system (75).

8. Multifunctional device (100) according to any one of claims 3 to 7, **characterized by**
rolls which are formed on the outer receptacle bottom and preferably designed to be retractable.

9. Multifunctional device (100) according to any one of the preceding claims, **characterized in that**
at least one current-fed (50) and/or current-feeding functional unit (51) is at least in part received by a housing (85) of water-tight formation and separated from the planting receptacle (8).

10. Multifunctional device (100) according to any one of the preceding claims, **characterized by**
a plurality of planting receptacles (8) and/or a plurality of culture pots (6) arranged on a plurality of vertically offset levels (80).

11. Multifunctional device (100) according to any one of the preceding claims, **characterized in that**
the current-fed functional unit (50) comprises at least one radio module (78).

## Revendications

1. Dispositif multifonction (100) destiné à contenir des plantes (90) avec au moins un récipient de plante (8), comprenant
un élément de positionnement (20) dans lequel au moins un pot de culture (2) qui présente une virole de pot de culture (18) et un fond de pot de culture (19) peut être inséré et fixé de telle manière que l'élément de positionnement (20) puisse être inséré dans le récipient de plante (8) conjointement avec le pot de culture (2) de telle manière qu'une zone atmosphérique (27) sensiblement étanchéifiée et un espace végétal (28) dans lequel une section inférieure du pot de culture (2) dépasse soient formés sous l'élément de positionnement (20), sachant que l'élément de positionnement (20) est constitué de telle manière que le fond de pot de culture (19) soit positionnable à une distance de hauteur (12) par rapport à un fond (9) du récipient de plante (8),
**caractérisé par**
au moins un module de chargement en courant (77) pour véhicules et au moins une unité de décompte et/ou unité de paiement (89) pour le module de chargement en courant (77).

2. Dispositif multifonction (100) selon la revendication 1,
**caractérisé en ce que**
l'élément de positionnement (20) est fabriqué comme une tôle ou un élément surfacique, en particulier comme une tôle ou un élément surfacique sensiblement fermé destiné à renforcer une formation de condensat, et qui est formé en particulier à partir d'un matériau ayant une bonne conductivité thermique.

3. Dispositif multifonction (100) selon l'une des revendications 1 à 2,
**caractérisé par**
un récipient extérieur (60) qui est formé par le récipient de plante (8) ou dans lequel le récipient de plante (8) est positionné.

4. Dispositif multifonction (100) selon l'une des revendications 1 à 3,
**caractérisé en ce que**
une unité fonctionnelle (50) alimentée en courant comprend au moins un écran (70).

5. Dispositif multifonction (100) selon la revendication 4,
**caractérisé en ce que**
l'écran (70) est fixé sur un dispositif de fixation situé au-dessus d'un/du récipient extérieur (60) en direction verticale et/ou de manière encastrée au niveau de la surface supérieure (61) du récipient extérieur (60).

6. Dispositif multifonction (100) selon l'une des revendications 3 à 5, **caractérisé en ce que**
l'unité fonctionnelle (51) d'alimentation en courant comprend au moins une cellule photovoltaïque (88) qui est constituée sur le récipient extérieur (60) et/ou sur une face de parement (66) perpendiculaire du dispositif.

7. Dispositif multifonction (100) selon l'une des revendications précédentes, **caractérisé en ce que**
une unité fonctionnelle (51) d'alimentation en courant comprend un système d'éclairage (75).

8. Dispositif multifonction (100) selon l'une des revendications 3 à 7,
**caractérisé par**
des rouleaux constitués au niveau du fond de récipient extérieur, qui sont constitués de préférence de manière encastrable.

9. Dispositif multifonction (100) selon l'une des revendications précédentes, **caractérisé en ce que**
au moins une unité fonctionnelle alimentée en courant (50) et/ou d'alimentation en courant (51) est disposée au moins en partie dans un boîtier (85) séparé du récipient de plante (8) et constitué de manière étanche à l'eau.

10. Dispositif multifonction (100) selon l'une des revendications précédentes, **caractérisé par**
plusieurs récipients de plante (8) et/ou plusieurs pots de culture (6) qui sont disposés sur plusieurs étages (80) décalés verticalement.

11. Dispositif multifonction (100) selon l'une des revendications précédentes, **caractérisé en ce que**
une unité fonctionnelle (50) alimentée en courant comprend au moins un module radio (78).
